# EUROPÄISCHE PATENTANMELDUNG

(11) **EP 2 009 318 A1**
(43) Veröffentlichungstag der Anmeldung: **31.12.2008**
(21) Anmeldenummer: 07033584.9
(22) Anmeldetag: 21.12.2007
(51) Int. Cl.: F16F 1/04, F21L 4/00, H01H 1/24

(54) **Druckfeder**

(30) Priorität: 30.06.2007 DE 102007030504
(71) Anmelder: Zweibrüder Optoelectronics GmbH, 42699 Solingen (DE)
(72) Erfinder: Opolka, Rainer, 42699 Solingen (DE); Buhl, Erich, 42697 Solingen (DE)
(74) Vertreter: Vomberg, Friedhelm

(57) **Zusammenfassung**

Die Erfindung betrifft eine Druckfeder (11) aus einem einzigen Federdraht mit bereichsweise unterschiedlichem Wicklungsdurchmesser. Der Erfindung liegt die Aufgabe zugrunde, eine neuartige Feder in einer raumsparenden Anordnung zu schaffen, die insbesondere in Tast- oder Druckschaltern Verwendung findet, so dass diese unempfindlich gegen Verschleißerscheinungen und gegen Schmutzanlagerungen ist. Ferner soll die Anzahl der Kontaktstellen minimiert werden. Die Aufgabe wird dadurch gelöst, dass die Druckfeder zumindest teilweise eine Mehrzahl von Wicklungen radial nebeneinander aufweist.

## Beschreibung

Die Erfindung betrifft eine Druckfeder, die aus einem einzigen Federdraht gewickelt ist und bereichsweise unterschiedliche Wicklungsdurchmesser aufweist.

In vielen mechanischen Geräten werden unterschiedliche Federn für eine Vielzahl von unterschiedlichen Anwendungen eingesetzt. Der technische Einsatzbereich von Druck- oder Zugfedern reicht von rein mechanischen Anwendungen, wie beispielsweise als Stoßdämpfer in Autos oder als Federung in Matratzen oder Sofas, bis hin zu Schaltmechanismen in winzigen elektronischen Baugruppen. Auch in Druck- und Tastschaltern für Taschenlampen oder Kugelschreibern werden Druckfedern häufig eingesetzt. Dabei zeichnet sich die Verwendung von Federn in Druck- oder Tastschalter in Taschenlampen dadurch aus, dass die Feder gleichzeitig als Stromleiter und somit als Federkontakt dienen kann.

Eine solche Druckfeder wird beispielsweise in der DE 102 37 955 A1 vorgeschlagen, die aus einem Stück Federdraht gewickelt sein soll und als Federung in einem Tast-oder Druckschalter Verwendung finden soll. Die vorgeschlagene Druckfeder soll zwei Bereiche aufweisen, die sich jeweils durch unterschiedliche Wicklungsdurchmesser auszeichnen sollen. Dabei soll vorzugsweise ein Bereich mit einem kleinen Wicklungsdurchmesser und einem verschwindenden axialen Versatz der Windungen versehen sein, der als Kontaktstift bezeichnet wird

In der US 2003/0151916 A1 wird vorgeschlagen die beschriebene Druckfeder innerhalb eines Druckschalters für Taschenlampen zu verwenden. Der Bereich der Druckfeder mit dem größeren Wicklungsdurchmesser soll derart auf einem der Pole der Batterien anliegen, dass ein elektrischer Kontakt entsteht. Der Kontaktstift hingegen soll in einer axial bewegbaren Endkappe stecken. Diese Endkappe soll an Ihrer Unterseite mit einem unterlegscheibenförmigen elektrisch leitfähigen Bereich versehen sein, der mit dem Kontaktstift der Druckfeder in elektrisch leitfähig verbunden sein soll. Die Endkappe soll ferner über einen Flansch verfügen, der mit einer Bördelung eines Abschlussstückes der Taschenlampe derart korrespondiert, dass die Endkappe nicht aus der Taschenlampe herausrutschen kann. Das Abschlussstück soll mit dem Taschenlampengehäuse durch eine Schraubverbindung verbindbar sein. Zwischen dem Gehäuse und der Endkappe mit dem leitfähigen Bereich auf der Unterseite ist eine Lücke vorgesehen, so dass die Endkappe nicht mit dem Ende des Gehäuses in Kontakt steht. Durch die Wirkung der Druckfeder soll dabei der Abstand zwischen Endkappe und Gehäuse stets aufrechterhalten werden. Durch Drücken auf die Endkappe soll die Feder nachgeben und damit den elektrisch leitfähigen Bereich der Endkappe in Kontakt mit dem Gehäuse bringen, wodurch ein Stromkreis über das Gehäuse geschlossen werden soll.

Nachteilig an den bekannten Druckschaltern ist, dass die Kontaktstellen und insbesondere die Kontaktstelle zwischen der Endkappe und dem Kontaktstift mit der Zeit durch Oxidation, Verschmutzung und Verschleißerscheinungen keinen optimalen elektrischen Kontakt gewährleisten. Das kann insbesondere zu Wackelkontakten führen. Durch Staub und andere Verschmutzungen kann auch die Funktionsweise der Kontaktstelle zwischen der Endkappe und dem Gehäuse beeinträchtigt werden. Nachteilig ist auch ferner, dass der vorgeschlagene Druckschalter drei elektrische Kontakte aufweist, nämlich zwischen Batterie und Feder, zwischen Feder und Endkappe und zwischen Endkappe und Gehäuse. Es ist allgemein bekannt, dass die eine größere Anzahl von Kontaktstellen für die elektrische Leitfähigkeit der Schaltung nicht von Vorteil ist.

Es ist daher Aufgabe der vorliegenden Erfindung eine neuartige Feder in einer raumsparenden Anordnung zu schaffen, die insbesondere in Tast- oder Druckschaltern Verwendung findet, so dass diese unempfindlich gegen Verschleißerscheinungen und gegen Schmutzanlagerungen ist. Ferner soll die Anzahl der Kontaktstellen minimiert werden.

Diese Aufgabe wird von der Druckfeder nach Anspruch 1 gelöst, deren Vorteil insbesondere in der kompakten Bauweise liegt. Weiterbildungen der Feder sind in den Unteransprüchen beschrieben.

Nach einer Weiterentwicklung der Erfindung wird die erfindungsgemäße Druckfeder in einem Tast- oder Druckschalter verwendet, wobei durch die Feder, die aus einem elektrisch leitfähigen Material besteht, beim Zusammendrücken selbst ein Plus- und ein Minuspol elektrisch verbunden wird. Hierzu besteht die aus einem einzigen Federdraht gewickelte Feder aus zwei Federbereichen mit unterschiedlichen Wicklungsdurchmessern, wobei zumindest teilweise eine Mehrzahl von Wicklungen radial nebeneinander angeordnet ist. Vorzugsweise sind die beiden Wicklungsbereiche koaxial zueinander angeordnet. Für die Konstruktion eines Druck-oder Tastschalters kann beispielsweise der innere Federbereich länger gewählt werden als der äußere Federbereich. Bei geeigneter Lage eines entsprechenden Pols besteht kein Kontakt zwischen der Feder und dem Pol. Durch Zusammendrücken der inneren Feder kann die äußere Feder auf einen elektrischen Pol gedrückt werden, wodurch ein Stromkreis über die Druckfeder geschlossen wird.

Vorteilhaft gegenüber dem bekannten Stand der Technik ist, dass der Druckschalter mit der Druckfeder nur zwei Kontaktstellen aufweist, was die Empfindlichkeit der Schaltungsanordnung erheblich verbessert. Aufgrund von Torsions- und Kompressionseffekten kommt es ferner an den Kontaktstellen beim Zusammendrücken der Feder dazu, dass diese auf den Kontaktstellen reibt. Möglich Staub-, Schmutzablagerungen oder kleinere Oxidationsschichten werden dadurch bei Betätigung des Schalters beseitigt.

Weitere Ausgestaltungen der Erfindung werden im Folgenden anhand der Figuren näher beschrieben. Es zeigen:

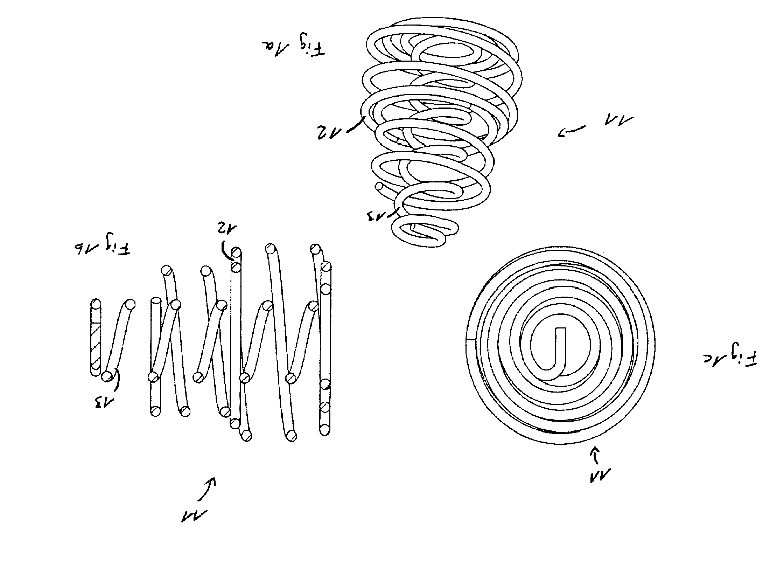

- Fig. 1a: eine Druckfeder in perspektivischer Darstellung,
- Fig. 1 b: einen vertikaler Schnitt durch eine Druckfeder,
- Fig. 1 c: eine Druckfeder in einer Draufsicht,
- Fig. 2a: eine andere Ausführungsform der Druckfeder in perspektivischer Darstellung,
- Fig. 2b: einen vertikaler Schnitt durch eine Druckfeder,
- Fig. 2c: eine Draufsicht auf eine Druckfeder.
- Fig. 3a: eine Schaltkreisanordnung mit integrierter erfindungsgemäßer Feder bei unterbrochenem Stromkreis,
- Fig. 3b: eine Schaltkreisanordnung mit integrierter erfindungsgemäßer Feder bei geschlossenem Stromkreis,
- Fig. 4a: ein Ausführungsbeispiel eines Tast- oder Druckschalters (ausgeschaltet),
- Fig. 4b: ein Ausführungsbeispiel eines Tast- oder Druckschalters (eingeschaltet),
- Fig. 4c: eine Draufsicht auf die Schnittebene C-C,
- Fig. 5a: ein Ausführungsbeispiel eines Tast- oder Druckschalters (ausgeschaltet),
- Fig. 5b: ein Ausführungsbeispiel eines Tast- oder Druckschalters (eingeschaltet),
- Fig. 5c: eine Draufsicht auf die Schnittebene A-A,
- Fig. 6a: ein Ausführungsbeispiel für die Verwendung des Druckschalters in einer Taschenlampe (ausgeschaltet) und
- Fig. 6b: ein Ausführungsbeispiel für die Verwendung des Druckschalters in einer Taschenlampe (eingeschaltet).

Für die erfindungsgemäße Druckfeder (11, 12) sind im Wesentlichen zwei Ausführungsformen vorgesehen. In den Fig. 1 a bis c und 2 a bis c sind diese beiden unterschiedlichen Ausführungsformen perspektivisch, im Schnitt und in einer Draufsicht dargestellt. Die Fig. 1 a zeigt eine erfindungsgemäße Druckfeder (11), wobei diese Druckfeder (11) einen inneren Federbereich (13) und einen äußeren Federbereich (12) aufweist. Der innere Federbereich (13) ist länger als der äußere Federbereich (12).

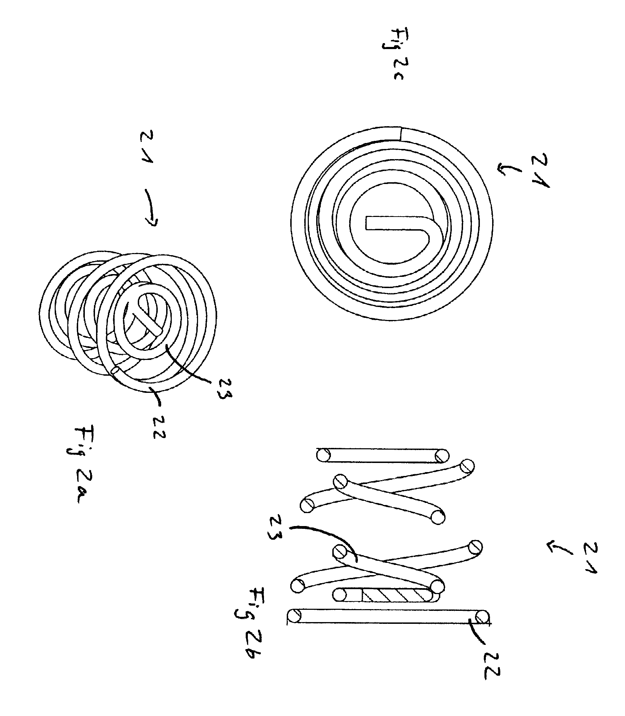

In der Fig. 2a ist die erfindungsgemäße Druckfeder (21) dargestellt, wobei bei dieser Ausführungsform der innere Federbereich (23) kürzer gewählt ist als der äußere Federbereich (22). Eine weitere Ausgestaltungsmöglichkeit sieht vor, dass der äußere Federbereich und der innere Federbereich gleich lang sind.

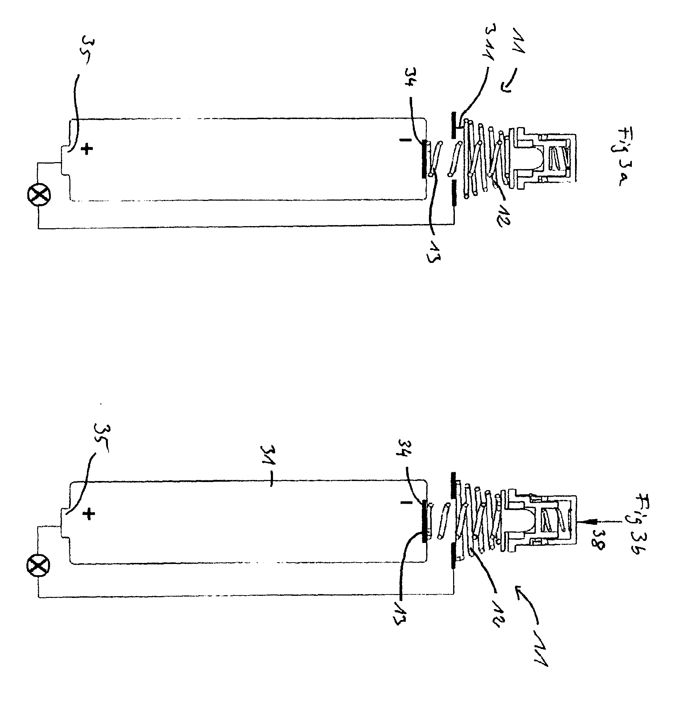

In den Figurengruppen 3 bis 6 sind mehrere Ausführungsformen der erfindungsgemäßen Druckfeder (11, 21) dargestellt, die in einem Druck- oder Tastschaltern eingebaut ist. Die Fig. 3a und b zeigen eine mögliche Ausführungsform eines Schaltplans in einer Taschenlampe. In Fig. 3a ist zu erkennen, dass der innere Federbereich (13) auf dem Minuspol (34) der Batterie (31) aufliegt. Zwischen der Batterie (31) und dem äußeren Federbereich (12) befindet sich der Pluspol (35) der Schaltanordnung. Der dargestellte Stromkreis ist aufgrund des Abstandes (311) zwischen dem Pluspol (35) und der Druckfeder (11) nicht geschlossen. In Fig. 3b ist dargestellt, dass durch Drücken in Pfeilrichtung (38) der innere Federbereich (13) soweit eingedrückt wird, dass der äußere Federbereich (12) auf den Pluspol (35) der Schaltanordnung drückt.

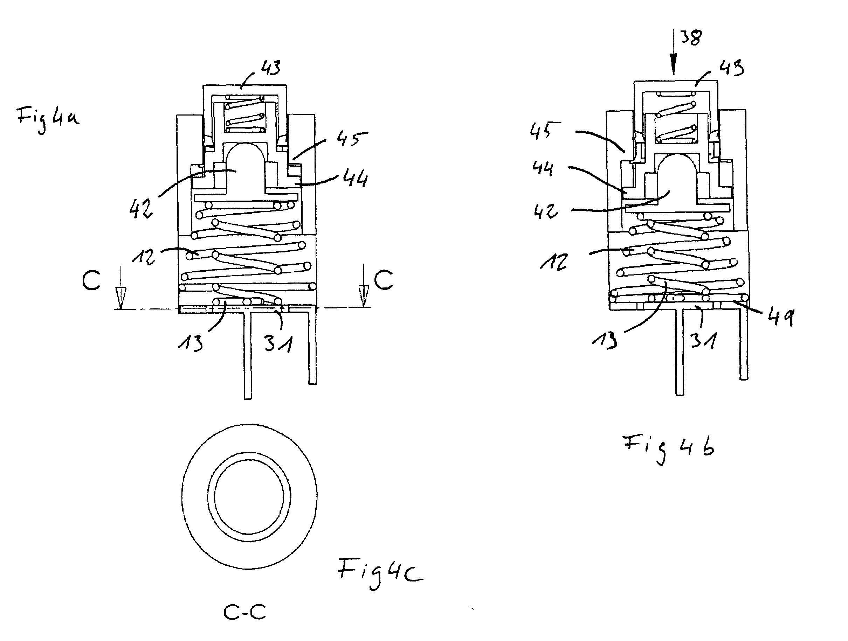

Für den Einbau der Druckfeder (11, 21) in einen Tast- oder Druckschalter sind im Wesentlichen zwei verschiedene Ausführungsformen vorgesehen. Eine erste Ausführungsform ist in den Fig. 4a bis c dargestellt. Der Fig. 4a ist zu entnehmen, dass der dünne innere Federbereich (13) auf dem Minuspol (34) einer Batterie (31) aufliegt, wobei die Batterie (31) nur teilweise dargestellt ist. Durch Drücken des Druckknopfes (43) in Pfeilrichtung (38) wird der Kontakt (49) über die äußere breitere Feder (12) hergestellt. Der Druckschalter als solcher weist gegenüber dem Stand der Technik keine besonderen technischen Neuerungen auf. Im vorliegenden Ausführungsbeispiel ist der Druckschalter aus einem normalen Druckknopf (43) und einem dazugehörigen Stößel (42) zusammengesetzt. Vorzugsweise ist dieser Stößel (42) aus einem elektrisch nicht leitenden Material hergestellt. Dies hat den Vorteil, dass das Gehäuse und damit auch der Druckknopf der Taschenlampe aus einem leitenden Material wie beispielsweise Metall bestehen können.

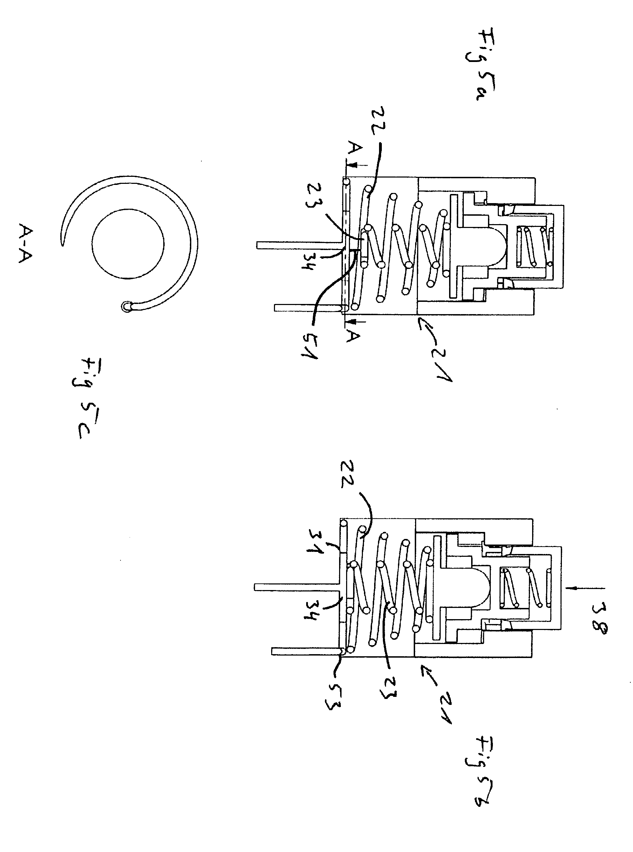

Eine weitere Ausführungsform der in einem Druck- oder Tastschalter eingebauten Druckfeder ist in den Fig. 5a bis c dargestellt, wobei dieser Ausführungsform eine Druckfeder (21) vorsieht, bei der innere Federbereich (23) kürzer gewählt ist als der äußere Federbereich (22). Dadurch entsteht zwischen dem Minuspol (34) und dem inneren Federbereich (23) ein Abstand (51). Durch Zusammendrücken der Druckfeder (21) in Pfeilrichtung (38) wird zunächst nur der äußeren Federbereich (22) zusammengedrückt. Bei hinreichender Kompression wird der innere Federbereich (23) auf den Minuspol (34) der Batterie (31) gedrückt, die ebenfalls nur teilweise dargestellt ist, so dass der Schaltkreis geschlossen ist. In dieser Ausführungsform ist die äußere große Feder (22) direkt auf der Außenkante (53) der Batterie (31) aufgesetzt.

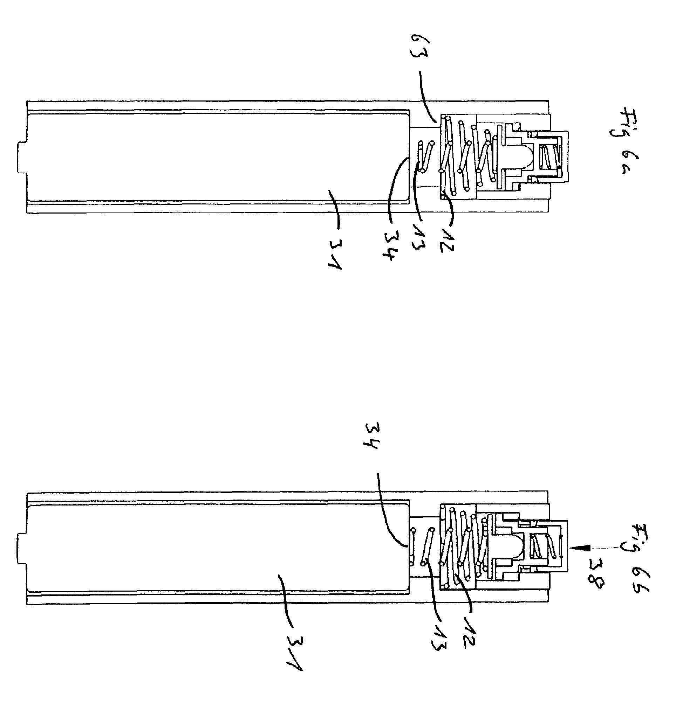

Eine weitere Ausführungsform ist den Fig. 6a und b zu entnehmen, wobei sich die dargestellte Ausführungsform von der Ausführungsform der Fig. 4a bis c dadurch unterscheidet, dass der äußere Federbereich (12) nicht auf der Batterie (31), sondern auf einem Sockel (63) aufsitzt. Auch hier kann durch Drücken des Druckknopfes (43) in Pfeilrichtung (38) der dünne lange Federbereich (13) auf den Minuspol (34) der Batterie (31) gedrückt werden, so dass der Schaltkreis geschlossen ist.

Die erfindungsgemäße Druckfeder (11, 21) kann nicht nur in Druckknöpfen verwendet werden, sondern beispielsweise auch als Federelement in Matratzen und Sofas. Aufgrund der speziellen Kennlinie der Druckfeder (11, 21), wobei die Kennlinie den Zusammenhang zwischen Verformung bei angewandter Kraft angibt, ist die Druckfeder (11, 21) geeignet zur Federung von Personen, die über unterschiedliche Massen verfügen. Vorzugsweise ist die Druckfeder derart auszugestalten, dass der längere Federbereich (13, 22) eine größere Federkonstante aufweist als der kürzere Federbereich (12, 13). Die Kennlinie einer solchen Druckfeder (11, 21) weist zwei lineare Abschnitte mit unterschiedlichen Steigungen und eine Sprungstelle auf. Die Kennlinie ist damit nicht stetig differenzierbar. Für leichte Personen reicht der Federweg der längeren Feder (13, 22) aus. Bei Personen mit einer größeren Masse wird die längere Feder (13, 22) soweit zusammengedrückt, dass auch die kleinere Feder (12, 23) zur Federwirkung beiträgt. Die Federkonstante der gesamten Druckfeder (11, 21) ergibt sich durch Addition der einzelnen Federkonstanten, also der Äußeren (12, 22) und der Inneren (13, 23).

Auch eine Verwendung der erfindungemäßen Druckfeder (11, 21) als Stoßdämpfer ist möglich. Ähnlich wie bei der Anwendung in Matratzen hat die Sprungstelle in der Kennlinie den Effekt, dass auch Stöße, die über das normale Maß hinausgehen, dadurch aufgefangen werden können. Ein Durchschlagen auf die Karosserie wird somit verhindert.

## Patentansprüche

1. Druckfeder aus einem einzigen Federdraht mit bereichsweise unterschiedlichem Wicklungsdurchmesser,
**dadurch gekennzeichnet, dass**
zumindest teilweise eine Mehrzahl von Wicklungen radial nebeneinander angeordnet ist.

2. Druckfeder nach Anspruch 1, **dadurch gekennzeichnet, dass** die Druckfeder eine Mehrzahl von äußeren Wicklungen umfasst, wobei vorzugsweise die Mehrzahl von inneren Wicklungen zumindest teilweise radial neben den äußeren Wicklungen angeordnet sind.

3. Druckfeder nach einem der Ansprüche 1 oder 2, **dadurch gekennzeichnet, dass** in axialer Richtung die äußere Wicklungslänge kleiner, gleich oder größer ist als die innere Wicklungslänge, wobei vorzugsweise die äußeren und innere Wicklungen bis auf ein Tolleranzmaß koaxial angeordnet sind.

4. Druckfeder nach einem der Ansprüche 1 bis 3 **dadurch gekennzeichnet, dass** die Druckfeder aus elektrisch leitendem Material, insbesondere aus Kupfer oder einer Kupferlegierung besteht und wobei die Druckfeder vorzugsweise in einem Tastschalter oder einem Druckschalter insbesondere in einem Druck-oder Tastschalter für Taschenlampen eingebaut ist.

5. Druckfeder nach einem der Ansprüche 1 bis 4, **dadurch gekennzeichnet, dass** der Stromkreis über die Druckfeder als elektrischen Leiter schließbar ist und/oder dass ein Tastschalter mindestens ein Gehäuse, mindestens einen Druckknopf und mindestens einen Stößel umfasst, wobei der Stößel und/oder das Gehäuse vorzugsweise aus elektrisch isolierendem Material besteht.

6. Druckfeder nach einem der Ansprüche 1 bis 5, **dadurch gekennzeichnet, dass** das Gehäuse über eine Bördelung verfügt und/oder der Druckknopf über einen Flansch verfügt, wobei der Druckknopf derart in das Gehäuse einsetzbar ist, dass Flansch und Bördelung als Sperre für axiale Bewegungen in mindestens einer axialen Richtung dienen.

7. Druckfeder nach einem der Ansprüche 1 bis 6, **dadurch gekennzeichnet, dass** die Bewegung des Druckknopfes in die andere axiale Richtung durch die Druckfeder gedämpft ist

8. Druckfeder nach einem der Ansprüche 1 bis 7, **dadurch gekennzeichnet, dass** die Druckfeder im ausgeschalteten Zustand derart gelagert ist, dass mindestens ein Ende der Druckfeder zu einem elektrischen Pol beabstandet ist und/oder dass die Druckfeder im ausgeschalteten Zustand derart gelagert ist, dass ein elektrischer Pol mit einem Ende der Druckfeder elektrisch verbunden ist.

9. Druckfeder nach einem der Ansprüche 1 bis 8, **dadurch gekennzeichnet, dass** die Druckfeder den Stößel und/oder den Druckknopf mit dem Flansch gegen die Bördelung drückt.

10. Druckfeder nach einem der Ansprüche 1 bis 9, **dadurch gekennzeichnet, dass** die Druckfeder mindestens soweit kontrahierbar ist, dass durch Drücken des Druckknopfes das kontaktfreie Ende der Feder mit dem kontaktfreien elektrischen Pol einen elektrischen Kontakt bilden.
